(19) Europäisches Patentamt
European Patent Office
Office européen des brevets

(11) EP 4 678 001 A1

(12) EUROPEAN PATENT APPLICATION
published in accordance with Art. 153(4) EPC

(43) Date of publication:
14.01.2026 Bulletin 2026/03

(21) Application number: 24778888.8

(22) Date of filing: 21.02.2024

(51) International Patent Classification (IPC):
A01K 61/10 $^{(2017.01)}$

(52) Cooperative Patent Classification (CPC):
A01K 61/10

(86) International application number:
PCT/JP2024/006390

(87) International publication number:
WO 2024/202745 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.03.2023 JP 2023050473

(71) Applicant: Nissui Corporation
Tokyo 105-8676 (JP)

(72) Inventors:
• KOBAYASHI Junya
Hachioji-shi, Tokyo 192-0991 (JP)
• YAMASHITA Ryohei
Saiki-shi, Oita 876-1204 (JP)
• MORISHIMA Kagayaki
Saiki-shi, Oita 876-1204 (JP)

(74) Representative: Plougmann Vingtoft a/s
Strandvejen 70
2900 Hellerup (DK)

(54) **METHOD FOR SELECTING MIGRATORY FISH, METHOD FOR CULTURING SAME, AND MIGRATORY FISH**

(57) The present disclosure provides a method for selecting migratory fish to be sea-reared, the method comprising: (1) based on trait information and genotype information obtained for sea-reared migratory fish, creating a regression formula for predicting the trait information from the genotype information, (2) obtaining genotype information of freshwater-reared migratory fish, and (3) applying the regression formula created in (1) to the genotype information of the freshwater-reared migratory fish obtained in (2) to select an individual predicted to have a target trait from the freshwater-reared migratory fish.

**Fig.1**

**Description**

Technical Field

The present invention relates to a method for selecting migratory fish, a method for culturing migratory fish, and migratory fish.

Background Art

Breeding is based on heredity, and breeding of fish and shellfish is no exception. Many fish and shellfish require a long period of time to mature, and thus, it takes time to determine the effect of selection or crossing. Rearing management of a population of fish and shellfish over a long period of time, including the cost, is not easy.

In recent years, an approach from a gene to a trait has become possible also in fish and shellfish, instead of traditional genetics, which is searching for a gene from a trait.

Citation List

Non-patent Document

Non-Patent Document 1: C. Gonzalez et al., Aquaculture, Volume 548, Part 2, 15 February 2022, 737674.

Summary of Invention

Technical Problem

Parent fish for breeding are subcultured and maintained in freshwater from the viewpoint of rearing water temperature, quarantine, and the like. Thus, selection is performed based on the growth potential in freshwater, which can be actually evaluated in the parent fish. However, the growth potential in seawater is actually intended to be evaluated, and thus there is a possibility that appropriate selection cannot be performed by the method based on the growth potential in freshwater in the related art.

The present disclosure has been made in view of the above circumstances, and is directed to providing a selection method and a culture method capable of obtaining migratory fish suitable for growth in seawater, and migratory fish obtained by such methods.

Solution to Problem

The present disclosure includes the following embodiments.

[1] A method for selecting migratory fish to be sea-reared, the method comprising:

(1) based on trait information and genotype information obtained from sea-reared migratory fish, creating a regression formula for predicting the trait information from the genotype information;
(2) obtaining genotype information of freshwater-reared migratory fish; and
(3) applying the regression formula created in (1) to the genotype information of the freshwater-reared migratory fish obtained in (2) to select an individual predicted to have a target trait from the freshwater-reared migratory fish.

[2] A method for selecting or culturing migratory fish, the method comprising:

(1) based on trait information and genotype information obtained from sea-reared migratory fish, creating a regression formula for predicting the trait information from the genotype information;
(2) obtaining genotype information of freshwater-reared migratory fish;
(3) applying the regression formula created in (1) to the genotype information of the freshwater-reared migratory fish obtained in (2) to select an individual predicted to have a target trait from the freshwater-reared migratory fish; and
(4) freshwater-rearing the individual selected in (3).

[3] The selection method or culture method according to [1] or [2], wherein the sea-reared migratory fish in (1) are migratory fish sea-reared for 2 to 8 months.

[4] The selection method or culture method according to any one of [1] to [4], wherein the trait information is at least one of a body length, a body weight, a body mass index, or seawater adaptability.

[5] The selection method or culture method according to any one of [1] to [4], wherein the number of loci of single nucleotide polymorphisms to be used as the genotype information in (1) is 10000 or less.

[6] The selection method or culture method according to any one of [1] to [5], wherein the sea-reared migratory fish in (1) are migratory fish reared in freshwater.

[7] The selection method or culture method according to any one of [1] to [6], wherein the migratory fish are fish of the order Salmoniformes.

[8] A migratory fish produced by the method according to any one of [1] to [7].

Advantageous Effects of Invention

According to the present disclosure, a selection method and a culture method capable of obtaining migratory fish suitable for growth in seawater, and migratory fish obtained by such methods can be provided.

Brief Description of Drawing

FIG. 1 shows results of genome prediction for a body weight.
FIG. 2 shows distribution of body weights after rearing in a high growth group and a control group.

Description of Embodiments

A method for selecting migratory fish to be sea-reared according to a present embodiment comprising: (1) based on trait information and genotype information obtained from sea-reared migratory fish, creating a regression formula for predicting the trait information from the genotype information ; (2) obtaining genotype information of freshwater-reared migratory fish; and (3) applying the regression formula created in (1) to the genotype information of the freshwater-reared migratory fish obtained in (2) to select an individual predicted to have a target trait from the freshwater-reared migratory fish. The method for selecting migratory fish of the present embodiment may further comprise (4) freshwater-rearing the individual selected in (3).

A method for culturing migratory fish of a present embodiment comprises: (1) based on trait information and genotype information obtained from sea-reared migratory fish, creating a regression formula for predicting the trait information from the genotype information ; (2) obtaining genotype information of freshwater-reared migratory fish; (3) applying the regression formula created in (1) to the genotype information of the freshwater-reared migratory fish obtained in (2) to select an individual predicted to have a target trait from the freshwater-reared migratory fish; and (4) sea-rearing the individual selected in (3). Note that unless otherwise specified, hereinafter, the method of the present embodiment refers to both the selection method and the culture method.

As a result of intensive studies, the present inventors have found that adaptability of migratory fish to seawater is important for growth potential of migratory fish in a case where the migratory fish are reared in seawater (sea-reared). Thus, in a case where even an individual expected to grow at a high growth rate in freshwater has low adaptability to seawater, the growth potential in sea-rearing is sometimes low, and it has been difficult to predict the growth potential in sea-rearing from the trait information and the genotype information in freshwater. In contrast, in the method of the present embodiment, the regression formula is created from the trait information and the genotype information obtained for the migratory fish sea-reared, and thus the seagrowth of the migratory fish can be predicted more appropriately.

The migratory fish in the method of the present embodiment may be fish of the order Salmoniformes. The fish of the order Salmoniformes may be fish of the subfamily Salmoninae, the subfamily Coregoninae, or the subfamily Thymallinae. The fish of the subfamily Salmoninae may be fish of the genus Parahucho, the genus Salvelinus, the genus Salmo, or the genus Oncorhynchus.

Examples of the fish of the genus Parahucho include Hucho perryi. Examples of the fish of the genus Salvelinus include Salvelinus malma, Salvelinus pluvius, and Salvelinus leucomaenis. Examples of the fish of the genus Salmo include Salmo trutta and Salmo salar. Examples of the fish of the genus Oncorhynchus include Oncorhynchus keta, Oncorhynchus gorbuscha, Oncorhynchus masou, Oncorhynchus tshawytscha, Oncorhynchus nerka, Oncorhynchus mykiss, and Oncorhynchus kisutch.

The migratory fish in the method of the present embodiment may also be catadromous migratory fish. The catadromous migratory fish may be fish of the genus Spirinchus or the genus Hypomesus, which are fish of the family Osmeriformes, or fish of the genus Tribolodon, which are fish of the subfamily Leuciscinae, in addition to fish of the genus Parahucho, the genus Salvelinus, the genus Salmo, or the genus Oncorhynchus, which are fish of the subfamily Salmoninae.

Examples of the catadromous migratory fish of the genus Parahucho include Hucho perryi. Examples of the catadromous migratory fish of the genus Salvelinus include Salvelinus malma and Salvelinus leucomaenis. Examples of the catadromous migratory fish of the genus Salmo include Salmo trutta and Salmo salar. Examples of the catadromous migratory fish of the genus Oncorhynchus include Oncorhynchus keta, Oncorhynchus gorbuscha, Oncorhynchus masou, Oncorhynchus tshawytscha, Oncorhynchus nerka, and Oncorhynchus kisutch.

In (1) of the method of the present embodiment, the trait information and the genotype information of migratory fish already reared in seawater are used. The trait information may be at least one of a body length, a body weight, a condition factor or seawater adaptability. The body length may be a fork length. The body length is preferably long, the body weight and the condition factor are preferably large, and the seawater adaptability is preferably high.

The condition factor can be determined by the following formula.

$$\text{Formula: weight (g)/[fork length (cm)} \times \text{fork length (cm)} \times \text{fork length (cm)]} \times 1000$$

The seawater adaptability means the ability to adapt to a seawater environment and grow without growth stagnation in a case where the environment is shifted from a freshwater environment to the seawater environment.

The sea-reared migratory fish in (1) may be fish sea-reared for 2 to 8 months, fish sea-reared for 3 to 6 months, or fish sea-reared for 4 to 5 months. In particular, in a case where the migratory fish are Oncorhynchus kisutch, the period of sea-rearing is preferably 4 to 8 months because characteristics due to the sea-rearing period covering from the start of sea-rearing to shipment can be grasped.

The sea-reared migratory fish in (1) may be fish reared in freshwater for 6 to 14 months, may be fish reared in freshwater for 8 to 13 months, or may be fish reared in freshwater for 10 to 12 months, in addition to being sea-reared.

Further, the regression formula may be created after removing a subpopulation genetically different from the main population among the migratory fish population used in (1). The regression formula may be created by using a linear regression method, a nonlinear regression method, or other methods. The regression formula may be constructed from a predictive model.

In the case of creating a regression formula, only individuals at the top of the population may be selected and used among the trait information to be used to increase prediction accuracy. That is, when the target trait is a trait A, only a top group, counting from the individual with the highest trait A in the migratory fish population, can be used to create the regression formula. The size of the top group based on the target migratory fish population may be adjusted depending on the required prediction accuracy, and may be, for example, 70% or more. For example, when the target trait is a body weight and the body weight is measured at a certain time point, a group of migratory fish having a body weight of the top 70% or more, 60% or more, 50% or more, 40% or more, or 30% or more, counting from the individual having the largest body weight, is selected and used to select and use only information having a large influence, whereby the prediction accuracy can be increased in some cases.

The number of loci of single nucleotide polymorphisms (SNPs) to be used as the genotype information in (1) may be 10000 or less, from 200 to 5000, from 300 to 4000, or from 500 to 3000.

The SNPs may be found at a frequency of 1% or more, 3% or more, or 5% or more. The frequency of the SNPs may be a frequency in the population to be used for creating the regression formula in (1). Only SNPs with an allele number of 2 may be used.

In (1), an individual having a body weight of 25% or greater, 30% or greater, 35% or greater, 40% or greater, or 50% or greater of a standard shipment body weight may be used as a migratory fish reared in seawater for 2 months or longer. For example, for Oncorhynchus kisutch, the standard shipment body weight is about 2 kg. For Oncorhynchus kisutch, in (1), an individual of 500 g or greater, 600 g or greater, 700 g or greater, or 800 g or greater may be used as a migratory fish reared in seawater for two months or longer. An individual reared in seawater for two months or longer and reaching 25% or greater of the standard shipment body weight often does not have growth stagnation thereafter, and information having a higher correlation between trait information and genotype information is more likely to be obtained by acquiring trait information and genotype information for the population. In addition, an individual reared in seawater for two months or longer and reaching 35%, 40% or greater, or 50% or greater of the standard shipment body weight has high mechanical suitability when being processed after landing, and is likely to satisfy the standard as a shipment fish.

In (2), the genotype information of migratory fish freshwater-reared is obtained. Here, the freshwater-reared migratory fish in (2) may be any migratory fish that has experienced rearing in freshwater, and the period of rearing in freshwater may be shorter than one month (0 months), and the migratory fish may be migratory fish reared in freshwater for 0 to 14 months, migratory fish reared in freshwater for 6 to 14 months, migratory fish reared in freshwater for 8 to 13 months, or migratory fish reared in freshwater for 10 to 12 months.

In (3), the regression formula created in (1) is applied to genetic information obtained in (2) to select individuals predicted to have the target trait. Migratory fish having the target trait may be those having at least one of the body length, body weight, condition factor, or seawater adaptability at a sufficient level. This makes it easy to obtain a population of migratory fish having the target trait at a high level when the migratory fish are sea-reared from among the migratory fish freshwater-reared. In addition, the migratory fish selected by the method of the present disclosure have high seawater adaptability, and thus are less likely to cause disorders such as poor growth and poor swimming due to a decrease in food intake in a case where the migratory fish are switched from freshwater-rearing to sea-rearing to be continuously reared. This can be examined by sea-rearing a population selected by the method of the present disclosure and a population not selected by the method of the present disclosure for 3 months or longer, and comparing the growth of the populations using the body weight as an index.

The freshwater-reared migratory fish in (4) may be processed for food or may be used as parent fish. In this case, the freshwater-reared migratory fish in (4) may be mated with each other, or may be mated with sea-reared parent fish. It is preferable to carry out the mating under conditions of different genetic backgrounds because the genetic diversity can be maintained.

It can also be said that one aspect of the present disclosure provides migratory fish produced by any one of the above-described methods.

Examples

Example 1

1. Materials and methods

1-1. Test Fish

As the test fish, artificially egg-collected and hatched Oncorhynchus kisutch were used. After being hatched, some fish in the same group were reared in freshwater for 12 months, while the others were reared in freshwater for 9 months and then reared in seawater for 5 months. As a prediction target, 130 individuals (hereinafter, also referred to as freshwater individuals) that came to have 690 g or greater corresponding to the top 50% in terms of body weight were selected and used among the individuals reared for 12 months in the freshwater. In addition, for construction of a prediction model, 274 individuals (hereinafter, also referred to as sea individuals) randomly selected from individuals (700 g or greater) determined to be shippable at a time point of about 5 months after being offshore among individuals grown in the sea were used. A total of 404 individuals were used as test fish in the present analysis. For each individual, pectoral fin collection was also performed for DNA analysis, along with recording of body measurement data. The results of body measurements for the respective individual groups are summarized in Table 1. Note that CV in Table 1 is a coefficient of variation.

[Table 1]

Body size of test fish

| Group | Number of specimens (n) | Body weight (g) | | |
|---|---|---|---|---|
| | | Average | Standard deviation | CV |
| Freshwater individual | 130 | 805.2 | 95.3 | 11.8 |
| Sea individual | 274 | 1832.2 | 329.7 | 18.0 |

1-2. Genotyping

Genomic DNA was extracted from the pectoral fin fixed with 100% ethanol by a magnetic bead method using Agencourt DNAdvance Kit (available from Beckman Coulter, Inc.). Acquisition of the sequence data (read data) was commissioned to Bioengineering Lab. Co., Ltd., and the sequences were acquired by performing analysis by a GRAS-Di method using Hi-seq 2000 (Illumina) 2 lanes. The sequencing condition was set to 150 bp paired end sequencing.

Then, a quality check of the obtained read data was performed by Fast QC (version 0.11.8, Andrews, S. (2010) FastQC: A Quality Control Tool for High Throughput Sequence Data [Online]), and trimming conditions were set. The set conditions are shown in Table 2, and trimming was performed using Trimmomatic (version 0.39, Bolger AM, Lohse M, Usade B. (2014) Trimmomatic: a flexible trimmer for Illumina sequence data. Bioinformatics 30, 2114 to 2120). Note that in the following analysis, a read was used only when both of the paired reads were read.

[Table 2]

Trimming conditions using
Trimmomatic

| Option | Set conditions | Processing details |
|---|---|---|
| ILLUMINACLIP | NexteraPE-PE.fa:2:30:10 | Remove the adaptor sequence described in the designated FASTA (.fa) file. |
| | | The following 2:30:10 represents the number of mismatch nucleotides allowed and the like, and the default value is used. |
| HEADCROP | 20 | Remove 20 nucleotides from the tip of the read. |
| CROP | 145 | The first 145 nucleotides of the read are left, and the subsequent nucleotides are removed. |
| LEADING | 30 | Nucleotides with a quality score of less than 30 are removed from the tip of the read. |
| TRAILING | 20 | Nucleotides with a quality score of less than 20 are removed from the tail end of the read. |
| SLIDINGWINDOW | 4:20 | Calculate an average of quality scores with four nucleotides as one window, and in a case where the average is 20 or less, remove the subsequent nucleotide sequences. |
| MINLEN | 50 | Reads with less than 50 nucleotides are removed. |

After trimming, a quality check was performed again by Fast QC to confirm that the adaptor sequence and the like were removed, and then alignment to the Oncorhynchus kisutch genome sequence (Okis_V2; GenBank assembly accession: GCA_002021735.2) was performed by the MEM algorithm of BWA (Heng Li, Richard Durbin Bioinformatics, Volume 26, Issue 5, March 2010, Pages 589 to 595).

Then, the view option of Samtools was used to perform filtering in such a manner that a read remained only when both of the paired reads were aligned and aligned in only one location. The command options in the Samtools view are as in Table 3.

[Table 3]

Filtering conditions for reads using Samtools

| Option | Set conditions | Processing details |
|---|---|---|
| F | 12 | Remove a read when one or both of the paired reads are not aligned. |
| q | 4 | Remove reads aligned at a plurality of locations. |

After read filtering, haplotype estimation was performed using HaplotypeCaller of GATK (version 4.1.3.0, McKenna A, Hanna M, Banks E, Sivachenko A, Cibulskis K, Kernytsky A, Garimella K, Altshuler D, Gabriel S, Daly M, DePristo MA. (2010) The Genome Analysis Toolkit: a MapReduce framework for analyzing next-generation DNA sequencing data. Genome Res, 20: 1297 to 303.), and the obtained GVCF files of the individuals were integrated into one GVCF file.

Thereafter, polymorphism determination was performed by GenotypeGVCFs of the software, and only SNPs were extracted using SelectVariants and VariantFiltration, followed by hard filtering. As the conditions of the hard filtering, the recommended values for SNP analysis (Van der Auwera GA, Carneiro M, Hartl C, Poplin R, del Angel G, Levy-Moonshine A, Jordan T, Shakir K, Roazen D, Thibault J, Banks E, Garimella K, Altshuler D, Gabriel S, DePristo M. (2013) From FastQ Data to High-Confidence Variant Calls: The Genome Analysis Toolkit Best Practices, Pipeline. Curr Protoc Bioinformatics, 43: 11.10.1 to 11.10.33.) were used.

Finally, vcftools (version 0.1.14, Danecek P, Auton A, Abecasis G, Albers CA, Banks E, DePristo MA, Handsaker RE, Lunter G, Marth GT, Sherry ST, McVean G, Durbin R; 1000 Genomes Project Analysis Group. (2011) The variant call format and VCFtools. Bioinformatics 27, 2156 to 2158) was used to perform filtering again by the following command option, and 2652 loci of SNPs which were biallelic and had a minor allele frequency of 5% or more, which were obtained in 95% of all analyzed individuals, were extracted and used for the subsequent analysis. The processing details are shown in Table 4.

[Table 4]

SNP filtering conditions using vcftools

| Option | Set conditions | Processing details |
|---|---|---|
| remove-indels | - | Remove a polymorphic locus by indel if included |
| min-alleles | 2 | Extract only an SNP locus with minimum allele number of 2 |
| max-alleles | 2 | Extract only an SNP locus with maximum allele number of 2 |
| max-missing | 0.95 | Extract only an SNP locus that can be determined in 95% or more of all individuals |
| minQ | 20 | Extract only an SNP locus with quality score of 20 or more |
| minDP | 3 | Extract only an SNP locus with depth of 3 or more |
| maf | 0.05 | Extract only an SNP locus with minor allele frequency of 5% or more |
| recode | - | Output results in VCF format |

1-3. Genome prediction

Genome prediction was performed by ridge regression using a glmnet package of statistical software R (Friedman J, Hastie T, Tibshirani R. (2010) "Regularization Paths for Generalized Linear Models via Coordinate Descent." Journal of Statistical Software, 33 (1), 1 to 22). In the present analysis, a genome prediction model was constructed using sea individuals, and phenotype value prediction of freshwater individuals was performed.

Note that to confirm the prediction accuracy, the cross validation of sea individuals divided into five was performed ten times, and the average value of correlation coefficients between predicted values and actual measured values in each trial was obtained. In one trial of the cross validation, data of sea individuals having both SNP information and sea score records was randomly divided into five sets, and a trial of constructing a genome prediction model with four sets of the five sets and performing genome prediction on the remaining one set was repeated for the five sets, thereby obtaining predicted values of all individuals. A vcfR package (Knaus BJ, Gruenwald NJ. (2017) "vcfR: a package to manipulate and visualize variant call format data in R." Molecular Ecology Resources, 17 (1), 44-53.) was used for reading the SNP data (VCF file) into R.

Note that the target trait was a body weight, and only a body weight was predicted. Based on the data of sea individuals, the heritability of each trait was calculated as the heritability in a narrow sense ($h^2$) by determining an additive genetic variance using an rrBLUP package of statistical software R (Endelman JB. (2011) "Ridge regression and other kernels for genomic selection with R package rrBLUP." Plant Genome, 4, 250 to 255.) and dividing the result by the total phenotypic variance.

2. Results

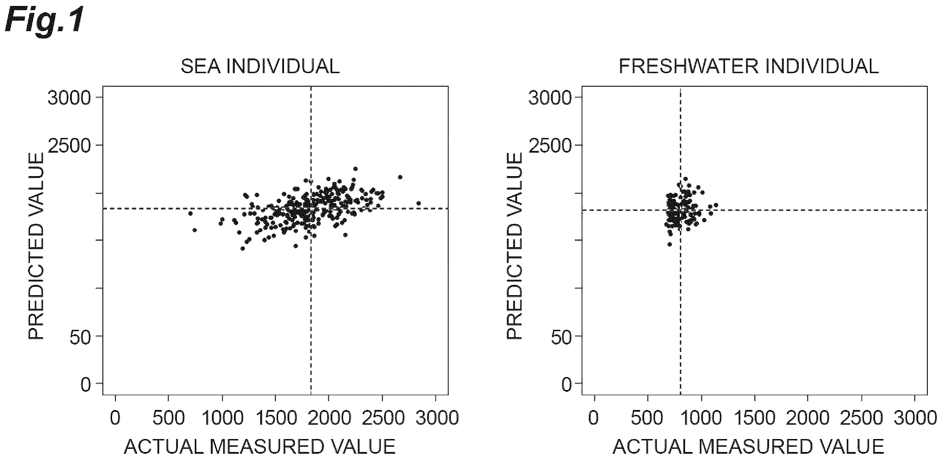

FIG. 1 shows results of genome prediction for body weight. The genome prediction of the body weight of the sea individuals was performed by repeating, five times, a trial of dividing the sea individuals into five parts, obtaining a regression formula from data of four parts of the five parts, and obtaining a predicted value of the remaining one part to obtain predicted values of all individuals. A positive correlation was observed between the obtained predicted value and the actual measured value (correlation coefficient: $0.47 \pm 0.021$). On the other hand, the genome prediction of the body weight of the freshwater individuals was performed by obtaining a regression formula from the data of all the sea individuals to obtain a predicted value. No correlation was found between the predicted value and the actual measured value (correlation coefficient was 0.14 for each). For the sea individuals, the average of the actual measured values was 1779.9 g, and the average of the predicted values was 1783.1 g. For the freshwater individuals, the average of the actual measured values was 805.2 g and the average of the predicted values was 1818.6 g. Note that the heritability ($h^2$) was 0.41.

Example 2

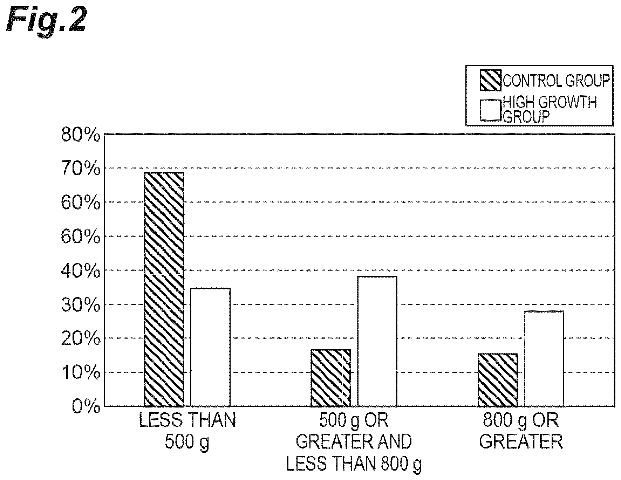

432 freshwater-reared fish with a high predicted value of body weight in sea-rearing were selected as a high growth group by using the method of Example 1, and they were taken to the sea in winter and reared in sea for 3 months. As a control group, 486 freshwater-reared fish that had not been subjected to such selection were also taken to the sea in winter and reared in sea for 3 months. At the time of transfer to the sea, the high growth group had a higher proportion of individuals exhibiting a morphology adapted to seawater as compared with the control group. The high growth group appeared to be more adapted to the seawater environment than the control group. The body weights of the high growth group and the control group after rearing were compared, and the distribution of the body weights was as shown in Table 5. In addition, FIG. 2 shows the distribution of the body weights after rearing of the high growth group and the control group.

[Table 5]

| Distribution of body weight of high growth group and control group after rearing | | | | |
|---|---|---|---|---|
| | Control group (individual) | Proportion (%) | High growth group (individual) | Proportion (%) |
| Less than 500 g | 333 | 69% | 149 | 34% |
| 500 g or greater and less than 800 g | 80 | 16% | 163 | 38% |
| 800 g or greater | 73 | 15% | 120 | 28% |
| Total | 486 | | 432 | |

It was confirmed that the high growth group selected by the method of the present disclosure exhibited high sea growth potential as compared with the control group.

In the control group, many individuals with a body weight of less than 500 g as poor growth were observed, whereas in the high growth group, there were fewer individuals with a body weight of less than 500 g, and there were more individuals with a body weight of 500 g or greater and individuals with a body weight of 800 g or greater, as compared with the control group. From these results, it has been considered that selection based on the growth potential in sea is useful for growth and breeding in migratory fish culture.

**Claims**

1. A method for selecting migratory fish to be sea-reared, the method comprising:

   (1) based on trait information and genotype information obtained from sea-reared migratory fish, creating a regression formula for predicting the trait information from the genotype information;
   (2) obtaining genotype information of freshwater-reared migratory fish; and
   (3) applying the regression formula created in (1) to the genotype information of the freshwater-reared migratory fish obtained in (2) to select an individual predicted to have a target trait from the freshwater-reared migratory fish.

2. The method according to claim 1, wherein the sea-reared migratory fish in (1) are migratory fish sea-reared for 2 to 8 months.

3. The method according to claim 1 or 2, wherein the trait information is at least one of a body length, a body weight, a body mass index, or seawater adaptability.

4. The method according to claim 1 or 2, wherein the number of loci of single nucleotide polymorphisms to be used as the genotype information in (1) is 10000 or less.

5. The method according to claim 1 or 2, wherein the sea-reared migratory fish in (1) are migratory fish reared in freshwater for 6 to 14 months.

6. The method of claim 1 or 2, wherein the migratory fish are fish of the order Salmoniformes.

7. A method for culturing migratory fish, the method comprising:

   (1) based on trait information and genotype information obtained from sea-reared migratory fish, creating a regression formula for predicting the trait information from the genotype information;
   (2) obtaining genotype information of freshwater-reared migratory fish;
   (3) applying the regression formula created in (1) to the genotype information of the freshwater-reared migratory fish obtained (2) to select an individual predicted to have a target trait from the freshwater-reared migratory fish; and
   (4) freshwater-rearing the individual selected in (3).

8. A migratory fish produced by a method comprising:

   (1) based on trait information and genotype information obtained from sea-reared migratory fish, creating a regression formula for predicting the trait information from the genotype information;
   (2) obtaining genotype information of freshwater-reared migratory fish;
   (3) applying the regression formula created in (1) to the genotype information of the freshwater-reared migratory fish obtained in (2) to select an individual predicted to have a target trait from the freshwater-reared migratory fish; and
   (4) freshwater-rearing the individual selected in (3).

**Fig.1**

EP 4 678 001 A1

Fig.2

## INTERNATIONAL SEARCH REPORT

| International application No. |
|---|
| **PCT/JP2024/006390** |

| A. | CLASSIFICATION OF SUBJECT MATTER |
|---|---|

***A01K 61/10***(2017.01)i
FI: A01K61/10

According to International Patent Classification (IPC) or to both national classification and IPC

| B. | FIELDS SEARCHED |
|---|---|

Minimum documentation searched (classification system followed by classification symbols)

A01K61/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2020-39335 A (BANKOKEI YOGYO KANKO CO., LTD.) 19 March 2020 (2020-03-19) claims | 1-8 |
| A | 国内初、立地条件を選ばないサツキマスの陸上養殖の達成！, 国立研究開発法人水産研究・教育機構, 25 July 2019, (Japan Fisheries Research and Education Agency), non-offic ial translation (Japan's first achievement of land-based farming of red-spotted masu salmon, Oncorhynchus masou ishikawae, regardless of location) [Research contents and features, Significance of the results] | 1-8 |
| A | JP 2017-148035 A (KIM, Sung-Uk) 31 August 2017 (2017-08-31) claims | 1-8 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 May 2024** | **14 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

INTERNATIONAL SEARCH REPORT
Information on patent family members

International application No.

**PCT/JP2024/006390**

| Patent document cited in search report | | | Publication date (day/month/year) | Patent family member(s) | | | Publication date (day/month/year) |
|---|---|---|---|---|---|---|---|
| JP | 2020-39335 | A | 19 March 2020 | (Family: none) | | | |
| JP | 2017-148035 | A | 31 August 2017 | KR | 10-1656855 | B | |
| | | | | KR | 10-1723422 | B | |
| | | | | CN | 107114287 | A | |

Form PCT/ISA/210 (patent family annex) (July 2022)

# EP 4 678 001 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **C. GONZALEZ et al.** *Aquaculture*, 15 February 2022, vol. 548, 737674
- **ANDREWS, S.** *FastQC: A Quality Control Tool for High Throughput Sequence Data*, 2010
- **BOLGER AM** ; **LOHSE M** ; **USADE B**. Trimmomatic: a flexible trimmer for Illumina sequence data. *Bioinformatics*, 2014, vol. 30, 2114-2120
- **HENG LI**. *Richard Durbin Bioinformatics*, March 2010, vol. 26 (5), 589-593
- **MCKENNA A** ; **HANNA M** ; **BANKS E** ; **SIVACHENKO A** ; **CIBULSKIS K** ; **KERNYTSKY A** ; **GARIMELLA K** ; **ALTSHULER D** ; **GABRIEL S** ; **DALY M**. The Genome Analysis Toolkit: a MapReduce framework for analyzing next-generation DNA sequencing data. *Genome Res*, 2010, vol. 20, 1297-303
- **VAN DER AUWERA GA** ; **CARNEIRO M** ; **HARTL C** ; **POPLIN R** ; **DEL ANGEL G** ; **LEVY-MOONSHINE A** ; **JORDAN T** ; **SHAKIR K** ; **ROAZEN D** ; **THIBAULT J**. From FastQ Data to High-Confidence Variant Calls: The Genome Analysis Toolkit Best Practices, Pipeline. *Curr Protoc Bioinformatics*, 2013, vol. 43
- **DANECEK P** ; **AUTON A** ; **ABECASIS G** ; **ALBERS CA** ; **BANKS E** ; **DEPRISTO MA** ; **HANDSAKER RE** ; **LUNTER G** ; **MARTH GT** ; **SHERRY ST**. 1000 Genomes Project Analysis Group. (2011) The variant call format and VCFtools. *Bioinformatics*, vol. 27, 2156-2158
- **FRIEDMAN J** ; **HASTIE T** ; **TIBSHIRANI R**. Regularization Paths for Generalized Linear Models via Coordinate Descent. *Journal of Statistical Software*, 2010, vol. 33 (1), 1-22
- **KNAUS BJ** ; **GRUENWALD NJ**. vcfR: a package to manipulate and visualize variant call format data in R. *Molecular Ecology Resources*, 2017, vol. 17 (1), 44-53
- **ENDELMAN JB**. Ridge regression and other kernels for genomic selection with R package rrBLUP. *Plant Genome*, 2011, vol. 4, 250-255